# EUROPÄISCHE PATENTANMELDUNG

(11) **EP 1 991 001 A1**
(43) Veröffentlichungstag der Anmeldung: **12.11.2008**
(21) Anmeldenummer: 07009525.2
(22) Anmeldetag: 11.05.2007
(51) Int. Cl.: H04N 7/173

(54) **Eingabegerät zur Interaktion mit einem Endgerät und/oder zur Steuerung des Endgeräts, Endgerät und Verfahren zum Bereitstellen eines mehrstufigen Interaktionsprozesses für Teilnehmer in einem Kommunikationsnetzwerk**

(71) Anmelder: SIEMENS AKTIENGESELLSCHAFT, 80333 München (DE)
(72) Erfinder: Hagl, Erich, 1120 Wien (AT); Hagl, Peter, 1120 Wien (AT); Moser, Markus, 8055 Graz (AT); Pelzmann, Martin, 8052 Graz (AT); Zimmermann, Matthias, Dr., 1050 Wien (AT)

(57) **Zusammenfassung**

Es wird ein Eingabegerät (34, 38) zur Interaktion mit einem Endgerät (27) und/oder zur Steuerung des Endgeräts (27) eines Kommunikationsnetzwerks (10) beschrieben. Das Endgerät (27) dient zum Empfang und zur Ausgabe eines eine Unterhaltungssendung repräsentierenden Inhaltsdatenstroms. Ferner ist das Endgerät (27) zur Übertragung von durch das Eingabegerät (34, 38) festgelegten Nachrichten an eine Verarbeitungseinheit des Kommunikationsnetzwerks (10) fähig. Das Eingabegerät (34, 38) verfügt über zumindest einen Sensor (31, 32, 33) zur Erfassung eines physischen Zustands eines Bedieners des Eingabegeräts (34, 38). Es ist ferner dazu ausgebildet, einen den physischen Zustand repräsentierenden Wert an das Endgerät (27) bzw. die Verarbeitungseinheit zu übertragen.

## Beschreibung

Eingabegerät zur Interaktion mit einem Endgerät und/oder zur Steuerung des Endgeräts, Endgerät und Verfahren zum Bereitstellen eines mehrstufigen Interaktionsprozesses für Teilnehmer in einem Kommunikationsnetzwerk

Die Erfindung betrifft ein Eingabegerät zur Interaktion mit einem Endgerät und/oder zur Steuerung des Endgeräts eines Kommunikationsnetzwerks. Das Endgerät dient zum Empfang und zur Ausgabe eines Inhaltsdatenstroms, der eine Unterhaltungssendung repräsentiert. Das Endgerät ist zur Übertragung von durch das Eingabegerät festgelegten Nachrichten an eine Verarbeitungseinheit des Kommunikationsnetzwerks fähig. Die Erfindung betrifft ferner ein Verfahren zum Bereitstellen eines mehrstufigen Interaktionsprozesses für Teilnehmer in einem Kommunikationsnetzwerk. Das Kommunikationsnetzwerk umfasst eine Verarbeitungseinheit und ein Mittel zum insbesondere gleichzeitigen Übertragen eines eine Unterhaltungssendung repräsentierenden Inhaltsdatenstroms an eine Mehrzahl an Endgeräte zur Ausgabe des Inhaltsdatenstroms, wobei die Endgeräte zum Übertragen von Nachrichten an die Verarbeitungseinheit ausgebildet sind.

Durch die Übertragung von Unterhaltungssendungen über das Internetprotokoll wird es in Zukunft für Teilnehmer möglich, an der Unterhaltungssendung interaktiv teilzunehmen. Unter einem Teilnehmer wird im Rahmen der vorliegenden Beschreibung ein Zuschauer einer Fernsehsendung oder ein Zuhörer einer Radiosendung verstanden. Gegenwärtig beschränkt sich die Interaktivität dabei auf die Teilnahme an einer Abstimmung oder anderen einfachen Vorgängen, wie z.B. dem Lesen spezifischer Emails.

Im Rahmen eines Votings werden beispielsweise dem Teilnehmer eine Mehrzahl an Auswahlmöglichkeiten angeboten, von denen er eine als favorisierte oder korrekte Antwort auswählen kann. Die Auswahl, d.h. das Voting, erfolgt bislang zumeist unter Verwendung eines Kommunikationsendgeräts, wie z.B. eines Telefons. Darüber hinaus gibt es in jüngerer Zeit Überlegungen, eine Abstimmung unter Verwendung des für den Empfang des Inhaltsdatenstroms vorhandenen Endgeräts, z.B. einer Settop-Box, vornehmen zu können. In diesem Fall betätigt der Teilnehmer ein entsprechendes Eingabemittel eines Eingabegeräts des Endgeräts, um die von ihm bevorzugte Antwort auszuwählen.

Die Ausnutzung des bei über das Internetprotokoll ausgesendeten Unterhaltungssendungen vorhandenen Rückkanals zur Implementierung komplexer Funktionalitäten sowie deren Verarbeitung ist bislang nicht möglich.

Es ist Aufgabe der vorliegenden Erfindung, eine Möglichkeit bereitzustellen, mit welcher die Teilnahme an Unterhaltungssendungen für Teilnehmer vereinfacht wird, bei denen eine Interaktivität mit den Teilnehmern Bestandteil der Unterhaltungssendung ist. Es ist insbesondere Aufgabe der vorliegenden Erfindung, ein Eingabegerät für ein Endgerät zu schaffen, welches die Teilnahme an einer interaktiven Unterhaltungssendung verbessert. Es ist weiterhin Aufgabe der Erfindung, ein Verfahren anzugeben, mit dem ein mehrstufiger Interaktionsprozess für Teilnehmer an der Unterhaltungssendung ermöglicht wird.

Diese Aufgaben werden durch die Merkmale der unabhängigen Patentansprüche gelöst. Vorteilhafte Ausführungsformen sind in den abhängigen Patentansprüchen wiedergegeben.

Ein erfindungsgemäßes Eingabegerät zur Interaktion mit einem Endgerät und/oder zur Steuerung des Endgeräts eines Kommunikationsnetzwerks verfügt über zumindest einen Sensor zur Erfassung eines physischen Zustands eines Bedieners des Eingabegeräts und ist ferner dazu ausgebildet, einen den physischen Zustand repräsentierenden Wert an eine Verarbeitungseinheit des Kommunikationsnetzwerks zu übertragen. Das Endgerät dient zum Empfang und zur Ausgabe eines eine Unterhaltungssendung repräsentierenden Inhaltsdatenstroms, welcher an eine Mehrzahl derartiger Endgeräte ausgesendet wird. Das Endgerät ist zur Übertragung von durch das Eingabegerät festgelegten Nachrichten an eine Verarbeitungseinheit des Kommunikationsnetzwerks fähig.

Bei dem Endgerät kann es sich beispielsweise um ein Fernsehgerät, ein Radiogerät oder eine Settop-Box zum Anschluss an eines der genannten Geräte handeln. Durch die Verwendung des erfindungsgemäßen Eingabegeräts wird es möglich, einen Rückkanal des Endgeräts zu dem Kommunikationsnetzwerk aufzubauen, um dadurch in einem ein- oder mehrstufigen Prozess Einfluss auf eine Unterhaltungssendung ausüben zu können. Die Einflussnahme erfolgt hierbei unter Berücksichtigung des den physischen Zustand repräsentierenden Wert. Einflussnahme kann z.B. eine inhaltliche Abänderung der Unterhaltungssendung sein.

Gemäß einer Ausführungsform ist der zumindest eine Sensor zur Erfassung von Hautfeuchtigkeit, von Schweiß, von einem Puls oder von einer Herzfrequenz ausgebildet. Dadurch ist das Eingabegerät in der Lage, einen, einer Emotion des Teilnehmers entsprechenden physischen Zustand zu ermitteln und an die Verarbeitungseinheit zu übertragen.

Das erfindungsgemäße Eingabegerät kann zur Kommunikation mit dem Endgerät und/oder mit einem weiteren Eingabegerät ausgebildet sein. Im letzteren Fall kann eine Kommunikation mehrerer Eingabegeräte untereinander erfolgen, welche beispielsweise ein und demselben Endgerät zugeordnet sind. Das Endgerät oder eines der Endgeräte kann beispielsweise eine Vorverarbeitung der von den Eingabegeräten jeweils erfassten physischen Zustände ihrer Bediener ermitteln und einen die Gesamtheit der physischen Zustände der Mehrzahl an Teilnehmern repräsentierenden Wert an die Verarbeitungseinheit des Kommunikationsnetzwerks übertragen. Hierdurch wird der Verarbeitungsaufwand auf Seiten des Kommunikationsnetzwerks vereinfacht.

Das Eingabegerät kann gemäß einer weiteren Ausführungsform über ein Eingabemittel verfügen, über welches der Inhalt einer über das Endgerät an die Verarbeitungseinheit zu übertragenden Nachricht festlegbar und/oder eingebbar ist. Beispielsweise kann das Eingabegerät über eine numerische und/ oder alphabetische Tastatur verfügen, über welche ein Teilnehmer eine komplexe (Text-)Nachricht eingeben kann. Das Eingabegerät kann alternativ oder zusätzlich auch über mit speziellen Funktionen belegten Tasten verfügen, bei deren Betätigung eine bestimmte, vordefinierte Aktion ausgeführt wird. Derartige Tasten sind beispielsweise farblich codierte Tasten, wie sie auf üblichen Fernbedienungen von Fernsehern zu finden sind.

Die Übertragung einer Nachricht von dem Eingabegerät an die Verarbeitungseinheit erfolgt grundsätzlich unter Zwischenschaltung des Endgeräts, welches die von dem Eingabegerät gesendeten Daten entgegennimmt und gemäß dem Übertragungsprotokoll des Kommunikationsnetzwerks an die Verarbeitungseinheit überträgt. Gemäß einer weiteren Ausführungsform wird bei der Übertragung der an die Verarbeitungseinheit zu übertragenden Nachricht ein eindeutiger Kennzeichner des Endgeräts in die Nachricht hinzugefügt.

Gemäß einer weiteren Ausführungsform ist dem Eingabegerät selbst ein eindeutiger Kennzeichner zugewiesen, welcher bei der Übertragung einer Nachricht an die Verarbeitungseinheit in die Nachrichten hinzugefügt wird.

In einer weiteren Ausbildung verfügt das Eingabegerät über eine Analyse- und/oder Auswerteeinheit der von ihr erfassten Sensordaten und/oder über das Eingabemittel eingegebenen Daten. Hierdurch wird das Endgerät als auch die Verarbeitungseinheit des Kommunikationsnetzwerks von der Verarbeitung einer Vielzahl an Daten entlastet. Insbesondere ist eine Vorverarbeitung von Daten durch das Eingabegerät möglich. Die Vorverarbeitung kann hierbei auch die von anderen Eingabegeräten ausgesendeten Daten mit umfassen.

Die Datenübertragung zwischen dem Eingabegerät und dem Endgerät sowie zwischen Eingabegeräten untereinander kann drahtlos und/oder drahtbehaftet realisiert sein.

Das Eingabegerät kann ferner mit einer Lesevorrichtung versehen sein, mit welcher die Daten eines Identifikationsmittels auslesbar sind. Bei der Lesevorrichtung kann es sich beispielsweise um einen RFID-Reader (RFID = Radio Frequency Identification) handeln, welcher auf einer Chipkarte gespeicherte Daten ausliest. Bei diesen Daten kann es sich insbesondere um einen Kennzeichner handeln, welcher einem Teilnehmer bzw. Bediener des Eingabegeräts zugeordnet ist. So lassen sich beispielsweise die durch das Eingabegerät erfassten Daten einem bestimmten Teilnehmer zuordnen, wenn dieser vor der Betätigung des Eingabegeräts oder vor der Erfassung der physischen Daten sich mit seinem Identifikationsmittel über die Lesevorrichtung an dem Eingabegerät identifiziert.

Ein erfindungsgemäßes Endgerät ist zum Anschluss an ein Kommunikationsnetzwerk und zum Empfang und zur Ausgabe eines eine Unterhaltungssendung repräsentierenden Inhaltsdatenstroms vorgesehen. Das Endgerät ist insbesondre als Settop-Box ausgebildet. Eine Kommunikation zwischen dem Endgerät und dem Kommunikationsnetzwerk erfolgt bevorzugt unter Verwendung des Internet Protokolls. Das Endgerät weist eine erste Einrichtung zur Analyse und/oder zur Auswertung von Daten auf, die von zumindest einem Eingabegerät, das nach der oben beschriebenen Art ausgebildet ist, an das Endgerät übertragen worden sind. Es weist ferner eine zweite Einrichtung zum Übertragen der durch die erste Einrichtung ermittelten Informationen an eine Verarbeitungseinheit des Kommunikationsnetzwerks auf. Das erfindungsgemäße Endgerät ist damit zur Vorverarbeitung von von dem oder den Eingabegeräten erfassten Informationen ausgebildet. Hierdurch wird der Verarbeitungsaufwand auf Seiten des Kommunikationsnetzwerks, insbesondere der Verarbeitungseinheit, reduziert.

Bei dem erfindungsgemäßen Verfahren zum Bereitstellen eines mehrstufigen Interaktionsprozesses für Teilnehmer in einem Kommunikationsnetzwerk, umfassend eine Verarbeitungseinheit, ein Mittel zum, insbesondere gleichzeitigen, Übertragen eines eine Unterhaltungssendung repräsentierenden Inhaltsdatenstroms an eine Mehrzahl an Endgeräte zur Ausgabe des Inhaltsdatenstroms, wobei die Endgeräte zur Übertragung von Nachrichten an die Verarbeitungseinheit ausgebildet sind, wird jedem Teilnehmer jeweils ein eindeutiger Kennzeichner zugewiesen. Jeder Teilnehmer wird durch die Verarbeitungseinheit einer bestimmten Rolle einer Mehrzahl von Rollen der Unterhaltungssendung zugeordnet, wobei die Zuordnung durch die Auswertung einer Anzahl an von den Teilnehmern gesendeten ersten Nachrichten erfolgt, welche die einem jeweiligen Teilnehmer zugewiesenen Kennzeichner umfassen. Durch die Auswertung von zweiten Nachrichten der einer ersten Rolle zugeordneten Teilnehmer in Reaktion auf eine Mehrzahl an in dem Inhaltsdatenstrom enthaltenen Auswahlmöglichkeiten wird ein Ergebnisparameter für die erste Rolle bestimmt. Der Ergebnisparameter für die erste Rolle wird dann als Eingangsparameter für zumindest eine zweite Rolle verwendet, so dass der Ablauf der zweiten Rolle beeinflusst wird.

Im Rahmen des erfindungsgemäßen Verfahrens wird ein "Rückkanal" verwendet, um mehrstufige Prozesse zu ermöglichen, die den Einfluss eines Teilnehmers auf das Geschehen der Unterhaltungssendung zu ermöglichen. Hierzu werden die Teilnehmer in Rollen eingeteilt und für die jeweiligen Rollen Fragenprofile oder Auswahlmöglichkeiten definiert. Eine Vielzahl an Teilnehmern werden in einer Rolle zusammengefasst. Dies erlaubt es, Einzelmeinungen der Teilnehmer zu bündeln, so dass die Verarbeitung einer Vielzahl an Teilnehmern an der interaktiven Unterhaltungssendung durch die Verarbeitungseinheit des Kommunikationsnetzwerks vereinfacht durchgeführt werden kann. Die Rolleneinteilung erlaubt ferner die Herstellung eines Konsenses, was durch die Auswertung der ersten Nachrichten der von den Zuschauern gesendeten Nachrichten erfolgt. Die Teilnehmer sind durch einen Mehrheitsentscheid, z.B. durch die Beantwortung vorgegebener Fragen oder Auswahlmöglichkeiten, in der Lage, z.B. eine definierte oder vorgegebene Handlung der Unterhaltungssendung zu beeinflussen. Die Übersendung der ersten und/oder zweiten Nachrichten der Teilnehmer über das Endgerät an die Verarbeitungseinheit des Kommunikationsnetzwerks kann dabei physische Zustände, welche beispielsweise durch Emotionen durch das Verfolgen der Unterhaltungssendung hervorgerufen sind, umfassen. Diese können durch die Verarbeitungseinheit und/oder das Endgerät und/oder das Eingabegerät interpretiert werden, so dass diese als Parameter der Einflussnahme dienen.

Durch die wiederholte Ausführung des Verfahrens ist es möglich, den Handlungsstrang der Unterhaltungssendung interaktiv durch die Teilnehmer beeinflussen zu lassen.

Gemäß einer Ausbildung der Erfindung wechselt die Zuordnung eines Teilnehmers zu einer der Rollen im Verlauf der Sendung. Ferner können Teilnehmer mit definierten Eigenschaften derselben Rolle zugeordnet werden.

In einer Weiterbildung der Erfindung erfolgt die Zuordnung der Rolle durch die Vorgabe von Auswahlmöglichkeiten durch die Verarbeitungseinheit und die Auswertungen der in Reaktion hierauf gesendeten Nachrichten der Teilnehmer. Das Senden der Nachrichten kann unter Zuhilfenahme des eingangs beschriebenen Eingabegeräts erfolgen.

Das Eingabegerät als multimediales Element kann an das Endgerät (z.B. die Settop-Box eines Fernsehgeräts) angeschlossen sein und die physischen Reaktionen des Zuschauers, hervorgerufen durch Emotionen, in diese repräsentierenden Werte übermitteln. Hierbei können, wie eingangs bereits erläutert, mehrere der Eingabegeräte miteinander kommunizieren. Es können einzelne oder mehrere oder alle der Eingabegeräte mit dem Endgerät kommunizieren, wobei die die Eingabegeräte bedienenden Teilnehmer unterschiedliche oder dieselbe Rolle haben können. Zur Unterscheidung ist es zweckmäßig, wenn das Eingabegerät über einen eindeutigen Kennzeichner verfügt, welcher zusätzlich zu einer Netzwerkadresse des Endgeräts übertragen wird.

Gemäß einer weiteren Ausbildung erfolgt die Zuordnung der Rolle durch die Vorgabe eines Auswahlmenüs und die Auswertung der in Reaktion hierauf gesendeten Nachrichten der Teilnehmer.

Zweckmäßigerweise wird für jede Rolle ein Profil mit Eigenschaften definiert.

Es ist ferner vorgesehen, dass für jede Rolle Fragestellungen oder Auswahlmöglichkeiten definiert werden, welche an die Endgeräte der Teilnehmer einer Rolle oder der Teilnehmer sämtlicher Rollen übertragen werden.

Gemäß einer weiteren Ausbildung werden die von den Endgeräten der Teilnehmer einer Rolle gesendeten Nachrichten gemeinsam durch die Verarbeitungseinheit verarbeitet.

Es ist ferner vorgesehen, dass die von den Endgeräten der Teilnehmer gesendeten Nachrichten eine einer Emotion entsprechende Information enthalten.

Die Erfindung wird nachfolgend näher anhand der Figuren erläutert. Es zeigen:
- Fig. 1: einen der Erfindung zu Grunde liegenden Prozess bei der Durchführung des Verfahrens, und
- Fig. 2: eine schematische Darstellung des der Erfindung zu Grunde liegenden Systems.

Im Rahmen der nachfolgenden Beschreibung wird der Begriff des Zuschauers als Synonym für einen Teilnehmer verwendet. Der Begriff Zuschauer steht in diesem Zusammenhang als Sammelbegriff für ein Publikum, z.B. ein Fernsehpublikum, einen Benutzer und dergleichen. Der Zuschauer ist damit eine physikalische Person, die aktiv durch das erfindungsgemäße Verfahren an einer Unterhaltungssendung teilnehmen kann und in der Lage ist, individuell seine Meinung zu äußern.

Unter dem Begriff einer Rolle wird eine Kategorisierung oder Einteilung verstanden, unter der ein Zuschauer in ein Geschehen der Unterhaltungssendung aktiv eingreifen kann. So kann beispielsweise eine Handlung oder die Sprache und Gestik eines Schauspielers beeinflusst oder mitbestimmt werden. Eine Rolle entspricht z.B. einem von einem Schauspieler gespielten oder einem Computer generierten Charakter (z.B. ein Geschworener oder Angeklagter einer Unterhaltungssendung, der ein juristisches Thema zu Grunde liegt).

Unter einem Profil wird ein vordefinierter Handlungsstrang verstanden. Hierbei können beispielsweise Fragen oder Auswahlmöglichkeiten je nach Profil vorbereitet sein. Hierdurch entsteht eine Art Drehbuch sämtlicher im Rahmen der Unterhaltungssendung vorstellbaren Möglichkeiten.

Der Begriff Frage wird als Sammelbegriff für Anfragen oder Auswahlmöglichkeiten an einen, mehrere oder alle Zuschauer der Unterhaltungssendung verstanden. Diese können von einem oder mehreren Zuschauern beantwortet werden, indem z.B. entsprechende Nachrichten an das Kommunikationsnetzwerk übertragen werden. Fragen können von einem Produzenten der Unterhaltungssendung in Form einer tatsächlichen Frage oder mehrerer Auswahlmöglichkeiten an die Zuschauer einer Rolle oder an alle Rollen übertragen werden. Im Rahmen der Auswertung werden jedoch lediglich diejenigen Antwortnachrichten auf Fragen berücksichtigt, welche von solchen Zuschauern bzw. Endgeräten abgegeben werden, die der vorab definierten Rolleneinteilung entsprechen.

Fragen können beispielsweise durch den Produzenten vorgegeben sein. Denkbar ist auch, dass die Fragen durch die Zuschauer beeinflusst oder bereitgestellt werden.

Unter dem Begriff des Parameters werden sämtliche von einem Zuschauer geäußerten Einflussfaktoren auf die Sendung verstanden. Dies kann durch Drücken einer Taste oder sensorisches Erfassen eines Parameters des Zuschauers des Eingabegeräts erfolgen.

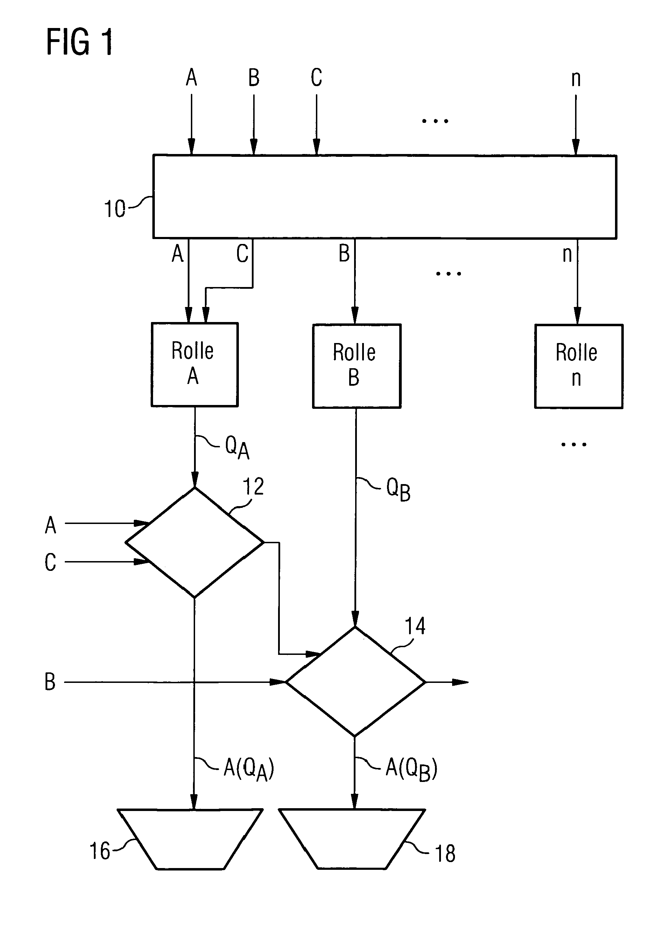

Der im Rahmen der Erfindung durchgeführte Prozess wird aus Fig. 1 ersichtlich. Zuschauer A, B, C, ..., n sind über ihre, durch Eingabegeräte steuerbaren, Endgeräte an eine Verarbeitungseinheit 10 eines Kommunikationsnetzwerks angeschlossen. Die an die Verarbeitungseinheit 10 angeschlossenen Zuschauer werden augrund individueller Eigenschaften zu einer von mehreren Rollen Rolle A, Rolle B, Rolle n zusammengefasst. Eine einmal zugewiesene oder gewählte Rolle kann hierbei dauerhaft während der gesamten Unterhaltungssendung beibehalten werden oder auch verändert werden. Die Zuweisung oder eigenständige Auswahl einer Rolle erfolgt durch den Zuschauer selbst. Eine Rolle kann einen oder in der Regel eine Vielzahl an Zuschauern umfassen, die alleine oder gemeinsam Eingriffe in die Handlung der Unterhaltungssendung vornehmen können. Die Rollenzuweisung erfolgt beispielsweise durch die Beantwortung von Fragen oder Auswahlmöglichkeiten, die beispielsweise im Vorspann der Unterhaltungssendung zu beantworten sind. Diese werden auf dem Endgerät eines jeweiligen Zuschauers angezeigt, wobei der Zuschauer durch Betätigung seines Eingabemittels, das mit dem Endgerät kommunizieren kann, eine entsprechende Auswahl vornimmt. In Reaktion hierauf wird eine Nachricht an die Verarbeitungseinheit 10 des Kommunikationsnetzwerks übertragen, welche die Zuordnung eines jeweiligen Zuschauers zu einer Rolle vornimmt. Damit werden die Zuschauer, die in einem oder mehreren definierten Parametern übereinstimmen und innerhalb einer vorgegebenen Toleranz liegen, in einer der Rollen zusammengefasst. Die in einer Rolle zusammengefassten Zuschauer können nunmehr gemeinsam die Handlung, z.B. in Form eines Mehrheitsbeschlusses bei einem durchgeführten Voting, beeinflussen.

Im Ausführungsbeispiel sind die Zuschauer A und C der Rolle A zugewiesen. Zuschauer B ist der Rolle B zugewiesen. Zuschauer n ist der Rolle n zugewiesen. Für jede der Rollen Rolle A, Rolle B, Rolle n, werden Profile mit Eigenschaften und möglichen Fragestellungen bzw. Auswahlmöglichkeiten definiert. So wird beispielsweise ein als Q_{A} bezeichnetes Profil der Rolle A an die der Rolle A zugewiesenen Zuschauer übertragen. Die der Rolle A zugewiesenen Zuschauer A, C haben nun die Möglichkeit, die ihnen zur Auswahl gestellten Fragen bzw. Auswahlmöglichkeiten zu beantworten. Dies geschieht in der oben beschriebenen Weise durch die Übertragung von Nachrichten in Reaktion auf die Betätigung entsprechender Eingabemittel der Eingabegeräte jeweiliger Endgeräte. Die von den Zuschauern A, C geäußerten Meinungen oder Reaktionen oder Emotionen werden nunmehr in einer Verarbeitungseinheit 12 verarbeitet. Die der Frage bzw. dem Profil Q_{A} zu Grunde liegende Antwort wird zur Beeinflussung der Handlung der Unterhaltungssendung herangezogen. Konkret wird die Antwort durch die Verarbeitungseinheit 12 als Eingangsgröße bei der Bereitstellung von Fragen oder Auswahlmöglichkeiten eines Profils Q_{B} der Rolle B verwendet. Die durch die Verarbeitungseinheit 12 errechnete Antwort beeinflusst somit die den Zuschauern der Rolle B zur Verfügung gestellten Fragen bzw. Auswahlmöglichkeiten. Das Geschehen oder die Handlung wird dann verändert, was wiederum eine Reaktion auf den Handlungsstrang der Rolle B Einfluss hervorrufen kann, z.B. in Form wiederum an die Antworten der Zuschauer B zur Verfügung gestellter Fragen an eine Rolle C, usw. Die Antworten A (Q_{A}) und A (Q_{B}) werden weiter Containern 16, 18 zugeführt, in welchen die Antworten gespeichert werden.

Die Definition der Profile der verschiedenen Rollen, kann kurz vor Ausstrahlung der Sendung erfolgen. Dabei können Zuschauer animiert werden, sich an der Unterhaltungssendung zu beteiligen. Dies kann beispielsweise durch eine kurze Beschreibung der Unterhaltungssendung und der nachfolgenden Handlung geschehen. Ferner können die Zuschauer bereits bei der Definition der Rollen mitwirken. Der Austausch zwischen den Zuschauern untereinander oder mit dem Produzenten kann beispielsweise mittels Chat erfolgen.

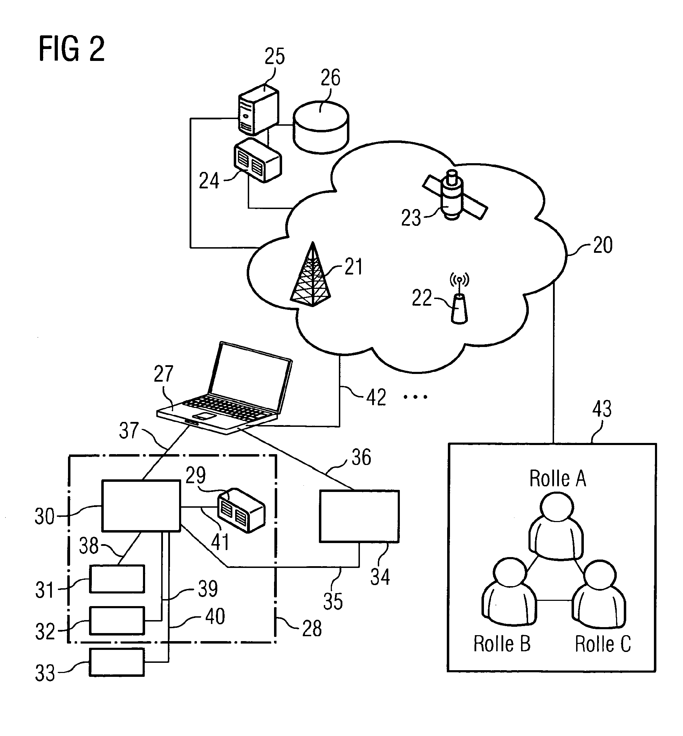

Die für die Durchführung des erfindungsgemäßen Verfahrens notwendige Topologie ist in Fig. 2 dargestellt.

Ein Kommunikationsnetzwerk 20 umfasst Mittel 21, 22, 23 zum gleichzeitigen Übertragen eines eine Unterhaltungssendung repräsentierenden Inhaltsdatenstroms an eine Mehrzahl an Endgeräte. Beispielhaft ist lediglich ein Endgerät 27 dargestellt. Die durch das Kommunikationsnetzwerk 20 gewählte Übertragungstechnologie kann dabei beliebiger Natur sein. Die Kommunikationsstrecke zwischen dem Endgerät 27 und dem Kommunikationsnetzwerk 20 kann drahtlos oder drahtbehaftet ausgebildet sein. Mit dem Netzwerk 20 verbunden ist eine Analyse- und Auswerteeinheit 24, eine Verarbeitungseinheit 25 (Server) sowie eine Datenbank 26. Diese Elemente können untereinander in beliebiger Weise miteinander vernetzt sein.

Mit dem Endgerät 27 ist ein Eingabegerät 28 verbunden. Die Kommunikation zwischen dem Endgerät und dem Eingabegerät 28 kann über eine kontaktbehaftete oder drahtlose Kommunikationsstrecke 37 erfolgen. Ferner kann, wie dies aus der schematischen Zeichnung hervorgeht, ein weiteres Eingabegerät 34 über eine weitere Kommunikationsstrecke 36 mit dem Endgerät verbunden sein. Zweckmäßigerweise weisen die Eingabegeräte 28, 34 jeweils eindeutige Kennzeichner auf, so dass die von diesen veranlassten Nachrichten eindeutig den Eingabegeräten 28, 34 und damit den sie bedienenden Zuschauern zugewiesen werden können.

Das Eingabegerät 28 umfasst Eingabemittel, z.B. in der Form einer Tastatur oder eines Touch Screens, sowie im Ausführungsbeispiel drei Sensoren 31, 32, 33, z.B. zur Erfassung von Hautfeuchtigkeit, Schweiß, Puls usw. Optional kann das Eingabegerät 28 über eine Analyse- und Auswerteeinheit verfügen, welche eine Vorverarbeitung der von den Sensoren und dem Eingabemittel gemachten bzw. detektierten Daten vornimmt. Optional kann ferner eine Lesevorrichtung (RFID-Lesegerät) vorgesehen sein, die Daten eines, einem Zuschauer zugeordneten Identifikationsmittels (z.B. Chipkarte) ausliest.

Die Datenübertragung zwischen einem jeweiligen Sensor 31, 32, 33 erfolgt über Kommunikationsstrecken 38, 39, 40, welche beliebig ausgebildet sein können. Die Kommunikation erfolgt mit einer Zentraleinheit 30 des Eingabegeräts 28.

Ferner ist mit dem Bezugszeichen 35 eine Kommunikationsverbindung zwischen den beiden Eingabegeräten 28, 34 gekennzeichnet, die untereinander Daten austauschen können.

Der durch das Kommunikationsnetzwerk 20 ausgestrahlte Inhaltsdatenstrom umfasst eine Mehrzahl an Rollen, Rolle A, Rolle B, Rolle C, deren Handeln aufgrund der Entscheidungen der Zuschauer, zugehörig den jeweiligen Rollen, beeinflusst werden kann. Dies ist durch das Bezugszeichen 43 symbolisiert. Bei der Unterhaltungssendung kann es sich um eine durch Schauspieler präsentierte Handlung oder eine computeranimierte Handlung handeln.

Die von den Eingabegeräten veranlassten Nachrichten werden durch das Endgerät 27 über einen Rückkanal der Kommunikationsstrecke 42 an das Kommunikationsnetzwerk 20 und damit an die Analyse- und Auswerteeinheit 24 bzw. die Verarbeitungseinheit 25 übertragen. Letztere kann durch die in der Datenbank 26 enthaltenen Rollenprofile die Handlung der Unterhaltungssendung beeinflussen, indem entsprechende Fragen oder Auswahlmöglichkeiten einer bestimmten Rolle wiederum an die Endgeräte 27 der Zuschauer übertragen werden. Die Entscheidungen der Rollen werden an die Handelnden, z.B. die Schauspieler der Rolle, übertragen, so dass diese entsprechend der Auswahl der Zuschauer die Handlung adaptieren können.

Der eine Unterhaltungssendung repräsentierende Inhaltsdatenstrom kann durch die Zuschauer durch die Ausführung des Verfahrens dahingehend abgeändert werden, dass der Zuschauer beispielsweise Überwinder von Gefahren wird. Die Zuschauer sind in der Lage, z.B. den Tagesablauf des Schauspielers zu bestimmen. Zuschauer können beispielsweise in der Rolle von Geschworenen schlüpfen. Bei einer Geschworenen-Jury können die Zuschauer eine Rolle einnehmen und gemeinsam mit anderen Teilnehmern zusammen wahrnehmen und damit in Interaktion zueinander treten. So können Fragen zur Zeugenbefragung vorgegeben werden, wovon eine oder mehrere per Mehrheitsentscheid ausgewählt werden. Die ausgewählten Fragen können dann von einem die Rolle verkörpernden Schauspieler oder einem Roboter (Avatars) ausgeführt, z.B. ausgesprochen werden. Andere Zuschauer der Unterhaltungssendung können in die Rolle eines Richters oder Anklägers schlüpfen.

## Patentansprüche

1. Eingabegerät (34, 38) zur Interaktion mit einem Endgerät (27) und/oder zur Steuerung des Endgeräts (27) eines Kommunikationsnetzwerks (10), welches Endgerät (27) zum Empfang und zur Ausgabe eines eine Unterhaltungssendung repräsentierenden Inhaltsdatenstroms dient, wobei das Endgerät (27) zur Übertragung von durch das Eingabegerät (34, 38) festgelegten Nachrichten an eine Verarbeitungseinheit des Kommunikationsnetzwerks (10) fähig ist, wobei das Eingabegerät (34, 38) über zumindest einen Sensor (31, 32, 33) zur Erfassung eines physischen Zustands eines Bedieners des Eingabegeräts (34, 38) verfügt und ferner dazu ausgebildet ist, einen den physischen Zustand repräsentierenden Wert an die Verarbeitungseinheit zu übertragen.

2. Eingabegerät (34, 38) nach Anspruch 1, bei dem der zumindest eine Sensor (31, 32, 33) zur Erfassung von Hautfeuchtigkeit oder Schweiß oder einem Puls oder einer Herzfrequenz ausgebildet ist.

3. Eingabegerät (34, 38) nach Anspruch 1 oder 2, bei dem das Eingabegerät (34, 38) zur Kommunikation mit dem Endgerät (27) und/oder einem weiteren Eingabegerät (34, 38) ausgebildet ist.

4. Eingabegerät (34, 38) nach einem der vorherigen Ansprüche, bei dem das Eingabegerät (34, 38) über ein Eingabemittel verfügt, über welches der Inhalt einer über das Endgerät (27) an die Verarbeitungseinheit zu übertragenden Nachricht festlegbar und/oder eingebbar ist.

5. Eingabegerät (34, 38) nach einem der vorherigen Ansprüche, bei dem bei der Übertragung einer an die Verarbeitungseinheit zu übertragenden Nachricht ein eindeutiger Kennzeichner des Endgeräts (27) in die Nachricht hinzugefügt wird.

6. Eingabegerät (34, 38) nach einem der vorherigen Ansprüche, bei dem diesem einen eindeutiger Kennzeichner zugewiesen ist, welcher bei der Übertragung einer Nachricht an die Verarbeitungseinheit in die Nachrichten hinzugefügt wird.

7. Eingabegerät (34, 38) nach einem der vorherigen Ansprüche, bei dem das Eingabegerät (34, 38) über eine Analyse- und/oder Auswerteeinheit der von ihr erfassten Sensordaten und/oder über das Eingabemittel eingegebenen Daten verfügt.

8. Eingabegerät (34, 38) nach einem der vorherigen Ansprüche, bei dem die Datenübertragung zu dem Endgerät (27) und/oder zu einem anderen Eingabegerät (34, 38) drahtlos und/oder drahtbehaftet vornehmbar ist.

9. Eingabegerät (34, 38) nach einem der vorherigen Ansprüche, bei dem dieses eine Lesevorrichtung aufweist, mit welcher die Daten eines Identifikationsmittels auslesbar sind.

10. Endgerät (27) zum Anschluss an ein Kommunikationsnetzwerk (10) und zum Empfang und zur Ausgabe eines eine Unterhaltungssendung repräsentierenden Inhaltsdatenstroms, insbesondere Settop-Box, wobei das Endgerät (27) aufweist:
- eine erste Einrichtung zur Analyse und/oder zur Auswertung von Daten, die von zumindest einem Eingabegerät (34, 38), das nach einem der vorherigen Ansprüche ausgebildet ist, an das Endgerät (27) übertragen worden sind,
und
- eine zweite Einrichtung zum Übertragen der durch die erste Einrichtung ermittelten Informationen an eine Verarbeitungseinheit des Kommunikationsnetzwerks (10).

11. Verfahren zum Bereitstellen eines mehrstufigen Interaktionsprozesses für Teilnehmer in einem Kommunikationsnetzwerk (10), umfassend eine Verarbeitungseinheit und ein Mittel zum, insbesondere gleichzeitigen, Übertragen eines eine Unterhaltungssendung repräsentierenden Inhaltsdatenstroms an eine Mehrzahl an Endgeräte (27) zur Ausgabe des Inhaltsdatenstroms, wobei die Endgeräte (27) zum Übertragen von Nachrichten an die Verarbeitungseinheit ausgebildet sind, bei dem
a) jedem Teilnehmer jeweils ein eindeutiger Kennzeichner zugewiesen wird,
b) jeder Teilnehmer durch die Verarbeitungseinheit einer bestimmten Rolle einer Mehrzahl von Rollen der Unterhaltungssendung zugeordnet wird, wobei die Zuordnung durch die Auswertung einer Anzahl an von den Teilnehmern gesendeten ersten Nachrichten erfolgt, welche die einem jeweiligen Teilnehmer zugewiesenen Kennzeichner umfassen,
c) durch die Auswertung von zweiten Nachrichten der einer ersten Rolle zugeordneten Teilnehmer in Reaktion auf eine Mehrzahl an in dem Inhaltsdatenstrom enthaltenen Auswahlmöglichkeiten ein Ergebnisparameter für die erste Rolle bestimmt wird, und
d) der Ergebnisparameter für die erste Rolle als Eingangsparameter für zumindest eine zweite Rolle verwendet wird, so dass der Ablauf der zweiten Rolle beeinflusst wird.

12. Verfahren nach Anspruch 11, bei dem die Zuordnung eines Teilnehmers zu einer der Rollen im Verlauf der Sendung wechselt.

13. Verfahren nach Anspruch 11 oder 12, bei dem Teilnehmer mit definierten Eigenschaften derselben Rolle zugeordnet werden.

14. Verfahren nach einem der Ansprüche 11 bis 13, bei dem die Zuordnung der Rolle durch die Vorgabe von Auswahlmöglichkeiten durch die Verarbeitungseinheit und die Auswertungen der in Reaktion hierauf gesendeten Nachrichten der Teilnehmer erfolgt.

15. Verfahren nach einem der Ansprüche 11 bis 14, bei dem die Zuordnung der Rolle durch die Vorgabe eines Auswahlmenüs und die Auswertung der in Reaktion hierauf gesendeten Nachrichten der Teilnehmer erfolgt.

16. Verfahren nach einem der Ansprüche 11 bis 15, bei dem für jede Rolle ein Profil mit Eigenschaften definiert wird.

17. Verfahren nach einem der Ansprüche 11 bis 16, bei dem für jede Rolle Fragestellungen oder Auswahlmöglichkeiten definiert werden, welche an die Endgeräte (27) der Teilnehmer einer Rolle oder der Teilnehmer sämtlicher Rollen übertragen werden.

18. Verfahren nach einem der Ansprüche 11 bis 17, bei dem die von den Endgeräten (27) der Teilnehmer einer Rolle gesendeten Nachrichten gemeinsam durch die Verarbeitungseinheit verarbeitet werden.

19. Verfahren nach einem der Ansprüche 11 bis 18, bei dem die von den Endgeräten (27) der Teilnehmer gesendeten Nachrichten eine einer Emotion entsprechende Information enthalten.

20. Verfahren nach einem der Ansprüche 11 bis 19, bei dem die Schritte c) und d) in einer Sendung mehrmals wiederholt werden.
